Europäisches Patentamt

European Patent Office

Office européen des brevets

(19)

(11) Publication number: **0 051 502**
**B1**

(12) **EUROPEAN PATENT SPECIFICATION**

(45) Date of publication of patent specification: **08.08.84**

(51) Int. Cl.³: **A 23 C 9/158**

(21) Application number: **81305260.2**

(22) Date of filing: **05.11.81**

(54) Process for the production of vitaminized milk powder.

(30) Priority: **05.11.80 GB 8035593**

(43) Date of publication of application:
**12.05.82 Bulletin 82/19**

(45) Publication of the grant of the patent:
**08.08.84 Bulletin 84/32**

(84) Designated Contracting States:
**AT BE DE FR GB IT NL**

(56) References cited:
**GB - A - 473 506**
**US - A - 2 150 315**
**US - A - 2 933 392**

**AGRICULTURAL AND FOOD CHEMISTRY,**
February 7, 1959, P. HARRIS "Supplementation
of foods with vitamins", pages 88-102
**JOURNAL OF DAIRY SCIENCE, vol. 40, 1957 D.**
COX et al. "Effect of nordihydroguaiaretic acid
(NDGA) and other factors on stability of added
vitamin A in dry and fluid milks", pages 564-570

The file contains technical information
submitted after the application was filed and not
included in this specification

(73) Proprietor: **THE CO-OPERATIVE WHOLESALE**
**SOCIETY LIMITED**
**New Century House**
**Manchester (GB)**

(72) Inventor: **Callanan, T. c/o The Co-operative**
**Wholesale**
**Society Limited New Century House**
**Manchester (GB)**
Inventor: **Savage, D. c/o The Co-operative**
**Wholesale**
**Society Limited New Century House**
**Manchester (GB)**

(74) Representative: **Pennant, Pyers et al,**
**Stevens, Hewlett & Perkins 5 Quality Court**
**Chancery Lane**
**London, WC2A 1HZ (GB)**

## Description

The present invention relates to the production of dry milk powders from milk vitaminised with Vitamin A.

In the production of dry milk powders it is well known that the Vitamin A content of the liquid milk may be supplemented or, in the case of skim milk, restored by a process known as vitaminisation.

In general there are two types of vitaminisation process: the "wet-mixing" process and the "dry-blending" process. In a wet-mixing process a liquid oil-based Vitamin A concentrate is added, with or without emulsification, to a small proportion of the liquid milk, to make a "pre-mix", which is then added back to the bulk of the milk prior to the drying operation. In a dry-blending process the concentrated Vitamin A, in a beadlet form, is dry-blended with the milk powder in the required proportion. Both the conventional wet-mixing and the dry-blending processes can be operated on a continuous, or a batch-wise, basis.

A disadvantage of the dry-blending process of vitaminisation is that it is more difficult to obtain a homogeneous dispersion of the added vitamin. Furthermore, the element of double handling or batch blending involved in the dry-blending process tends to increase production costs.

The "wet-mixing" process is thus the more convenient of these two processes in practice. However, in our experience, all of the existing wet-mixing techniques are subject to the disadvantage that the level of Vitamin A in the product decreases significantly on storage at temperatures of about 10° to 14°C. The rate of decrease in the Vitamin A level is particularly marked at high temperatures (e.g. 37°C), such as may be encountered under tropical conditions. The Vitamin A level often decreases at such a rate that, in a matter of weeks, it has dropped below the generally required level of 5000 I.U./100g., almost regardless of the initial dosage. This instability can, of course, result in the rejection of the milk powder by prospective purchasers; it may also result in the consumption of a sub-standard product which could, in certain circumstances, give rise to nutritional problems.

This instability is, in our view, due to a number of factors as described herein:

The addition of an unprotected Vitamin A mixture en-masse to a large bulk of raw milk (e.g. the equivalent of one to two hours production) results in a product of dubious and variable stability with regard to the Vitamin A shelf life.

Ignoring the question of the difficulty of obtaining an even distribution of the vitamin in a large bulk of raw milk, and the effect of agitation on the activation of milk lipases, one must consider the effect of microbiological attack, particularly with raw milk containing high counts of bacteria, on a dispersed vitamin emulsion.

Raw milk contains lipase and protease enzymes, of bovine and bacterial origin, which will attack a finely dispersed fat emulsion, such as oily Vitamin A concentrates. Milk, in addition, contains pro-oxidant factors which will affect any susceptible material, such as Vitamin A, and this is, in our view, a major source of Vitamin A instability.

The rate of these effects will depend on, amongst other things, the degree of dispersion of the vitamin concentrate. The finer the dispersion the greater the surface area exposed, the more rapid the degradation of the Vitamin A due to factors detailed above.

We have discovered that by carrying out a process whereby a prepared vitamin premix, containing the appropriate ingredients and processed in the appropriate manner, is mixed into milk, in the required proportions, we can enhance the stability of the vitaminised milk powder under both temperate and tropical conditions.

The present invention provides a process for the production of vitaminised milk powder from a supply of liquid skim milk in which process comprises:—

(a) heat-treating a small portion of the liquid milk;

(b) adding, to the heat-treated portion obtained in (a), an oil-based vitamin A concentrate containing at least one emulsifying agent;

(c) emulsifying the mixture obtained in (b);

(d) blending the emulsified mixture into the skim milk to be vitaminised; and

(e) concentrating and drying to give a vitaminised milk powder characterised in that the emulsified mixture of skim milk and oil-based vitamin A concentrate is subjected to a heat-treatment at a temperature of from 70° to 115°C, for at least one minute, prior to step (d).

In the process of the present invention, the portion of the liquid milk product heated in step (a), above, and the liquid milk product in step (c), above, are each heat-treated to a sufficient degree, to activate a major portion of the naturally-occurring antioxidant sulphydryl groups present in the milk protein and to stabilize the articifially created globule membrane. Typically, these heat-treatments are maintained for at least one minute, preferably eight minutes, depending on heating temperature, in order to stabilize the artificially formed fat globule membrane and to activate a major portion of the reducing sulphydryl groups.

The Vitamin A concentrate is added to the portion of the milk product heat-treated in (a) above, preferably after this has been cooled. The oil-based Vitamin A concentrates used in the present invention will typically be in the form of a stabilized oily formulation of a Vitamin A ester, such as the acetate or the palmitate. Such oily concentrates are available commercially. Typically, the oily concentrate will be diluted before use with an oil, or fat, having an low peroxide value that should have no effect on the taste of the final product. Any vegetable oil, or animal fat, which fulfils these requirements may be used. Specific examples include butter, coconut fat, soya oil and hardened palm kernel oil.

The oil-based Vitamin A concentrate contains at least one emulsifying agent to facilitate the emulsification and there after to form a protective membrane around the dispersed fat globules containing the Vitamin A. The Vitamin A concentrate preferably also contains one or more antioxidants. Suitable emulsifying agents include gelatine, glyceryl monostearate, glyceryl lactostearate, casein, calcium caseinate, whey proteins and sorbitan monostearate.

The emulsification of the mixture is best carried out with the use of a homogeniser. The process of homogenisation completes the emulsification of the vitamin-containing oil phase in the heat-treated milk portion. The emulsification process forms an artificial membrane, which helps to protect the vitamin from its micro-environment.

After the emulsification, the resulting emulsion which we call the vitamin premix is heat-treated at a temperature of from 70° to 115°C, and then blended in the desired proportion into the bulk milk phase. Although, the addition of the premix to the bulk milk phase will cool the premix, the latter is preferably precooled before the blending stage typically to a temperature less than 10°C, preferably about 4°C, to minimize microbiological deterioration.

Following the addition of the vitamin premix to the liquid, the blended mixture is preferably heated, to bring about further activation of the major portion of the milk protein sulphydryl groups, also further protecting the vitamin against the deleterious affects of its environment. The bulk liquid is then concentrated and dried by standard techniques, such as spray drying.

The process of the invention may be carried out on a continuous or a batch-wise basis. However, it is particularly suited to a continuous mode.

Milk powders produced by the wet blending process of the present invention have a superior vitamin retention after storage at 37°C, compared with powders produced by known methods of wet blending.

Example

A Vitamin A premix for addition to a skim milk to produce 10 tonnes of milk powder had a formulation as follows:

| | | |
|---|---|---|
| Skim Milk | 900 | l |
| Butter | 20 | kg |
| Vitamin A Palmitate (oily form, 1,000,000 I.U./g) | 1.01 | kg |
| Ascorbyl Palmitate | 0.115 | kg |
| Gelatine (230 bloom) | 0.200 | kg |
| Glyceryl Lactostearate (GLS) | 3.0 | kg |
| Glyceryl Monostearate (GMS) | 4.5 | kg |

The vitamin premix was prepared as follows:—

The butter was melted and the temperature adjusted to 65°C. The oil based Vitamin A palmitate was added to the melted butter and was mixed until an even dispersion was obtained. To this dispersion was added a preformed blend of GMS, GLS, ascorbyl palmitate and gelatine, with stirring until the blend was dispersed and melted in. Care was taken not to incorporate air into the mixture.

The oil blend produced was added at 65°C, to the skim milk at 65°C, which had previously been heat treated at 95°C for 15 minutes. In a homogeniser, the oil was homogenised into the skim milk phase.

The circulation between the homogeniser and the balance tank was maintained for 5 minutes (maintaining the homogeniser pressure), to ensure an even emulsion and subsequently heated to 91°C. The resultant vitamin premix was then cooled to 4°C. Using an adjustable, positive displacement, metering pump the premix was fed into the raw skim evaporator feed at the suction side of the feed pump, at a rate to give the required vitamin level per 100.g. of powder. The raw milk/premix blend was then heated at a temperature of 91°C for 4 minutes.

The heat treated skim milk was then evaporated and spray dried to give a vitaminised milk powder.

## Claims

1. A process for the production of vitaminised milk powder from a supply of liquid skim milk which process comprises:—
   (a) heat-treating a small portion of the liquid milk;
   (b) adding, to the heat-treated portion obtained in (a), an oil-based vitamin A concentrate containing at least one emulsifying agent;
   (c) emulsifying the mixture obtained in (b);
   (d) blending the emulsified mixture into the skim milk to be vitaminised; and
   (e) concentrating and drying to give a vitaminised milk powder characterised in that the emulsified mixture of skim milk and oil-based vitamin A concentrate is subjected to a heat-treatment at a temperature of from 70° to 115°C, for at least one minute, prior to step (d).

2. The process of claim 1, wherein the emulsifying agent is selected from gelatine, glyceryl, monostearate, glyceryl lactostearate, casein, calcium caseinate, whey proteins and sorbitan monostearate.

3. The process of either claim 1 or claim 2, wherein the oil-based vitamin A concentrate is a stabilised oily formulation of the acetate or the palmitate of vitamin A.

4. The process of any one of claims 1 to 3, wherein the heat-treated emulsified mixture of skim milk and oil-based vitamin A concentrate is cooled to a temperature less than 10°C prior to being blended into the skim milk to be vitaminised.

5. The process of any one of claims 1 to 4, wherein prior to concentrating and drying, the blended skim milk is subjected to a further heat-treatment.

## Revendications

1. Procédé de préparation d'une poudre de lait vitaminé à partir d'une charge constituée par du lait écrémé liquide, ledit procédé consistant en ce que:

(a) on soumet à un traitement thermique une faible fraction du lait liquide;

(b) on ajoute à la fraction traitée thermiquement obtenue en (a), un concentrat de vitamine A à base d'huile et contenant au moins un agent émulsifiant;

(c) on émulsifie le mélange obtenu en (b);

(b) on introduit le mélange émulsifié dans le tait écrémé destiné à être vitaminé en le mélangeant à celui-ci; et

(e) on procède à une concentration et à un séchage pour obtenir une poudre de lait vitaminé, caractérisé en ce que le mélange émulsifié de lait écrémé et de concentrat de vitamine A à base d'huile est soumis à un traitement thermique à une température de 70°C à 115°C, pendant au moins une minute, avant le stade (d).

2. Procédé selon la revendication 1 dans lequel l'agent émulsifiant est choisi parmi la gélatine, le monostéarate de glycéryle, le lactostéarate de glycéryle, la caséine, le caséinate de calcium, des protéines du petit lait et monostéarate de sorbitane.

3. Procédé selon la revendication 1 ou 2, caractérisé par le fait que le concentrat de vitamine A à base d'huile est une formulation huileuse stabilisée de l'acétate ou du palmitate de vitamine A.

4. Procédé selon l'une quelconque des revendications 1 à 3, caractérisé par le fait que l'on refroidit le mélange émulsifié et traité thermiquement de lait écrémé et de concentrat de vitamine A à base d'huile à une température inférieure à 10°C avant de l'introduire par mélange dans le lait écrémé à vitaminer.

5. Procédé selon l'une quelconque des revendications 1 à 4, caractérisé par le fait qu'avant la concentration et le séchage, on soumet le lait écrémé mélangé à un traitement thermique supplémentaire.

## Patentansprüche

1. Verfahren zur Herstellung von vitaminisiertem Milchpulver aus flüssiger Magermilch, wobei man

(a) einen kleinen Anteil der flüssigen Milch wärmebehandelt,

(b) zu dem in (a) erhaltenen wärmebehandelten Anteil ein auf Öl basierendes Vitamin A Konzentrat fügt, das mindestens ein Emulgiermittel enthält,

(c) die in (b) erthaltene Mischung emulgiert,

(d) die emulgierte Mischung in die zu vitaminisierende Magermilch einmischt und

(e) konzentriert und trocknet zwecks Erhalt von vitaminisiertem Milchpulver, dadurch gekennzeichnet, daß man die emulgierte Mischung aus Magermilch und aus auf Öl basierendem Vitamin A Konzentrat mindestens eine Minute lang vor der Stufe (d) einer Wärmebehandlung bei einer Temperatur von 70° bis 115°C unterzieht.

2. Verfahren nach Anspruch 1, dadurch gekennzeichnet, daß man das Emulgiermittel aus Gelatine, Glycerylmonostearat, Glyceryllactostearat, Casein, Calciumcaseinat, Molkeproteine und Sorbitanmonostearat auswählt.

3. Verfahren nach Anspruch 1 oder 2, dadurch gekennzeichnet, daß das auf Öl basierende Vitamin A Konzentrat eine stabilisierte ölige Zubereitung des Acetats oder des Palmitats von Vitamin A ist.

4. Verfahren nach einem der Ansprüche 1 bis 3, dadurch gekennzeichnet, daß man die wärmebehandelte, emulgierte Mischung aus Magermilch und auf Öl basierendem Vitamin A Konzentrat auf eine Temperatur von weniger als 10°C kühlt, bevor man sie in die zu vitaminisierende Magermilch einmischt.

5. Verfahren nach einem der Ansprüche 1 bis 4, dadurch gekennzeichnet, daß vor der Konzentrierung und Trocknung die gemischte Magermilch einer weiteren Wärmebehandlung unterzogen wird.